# EUROPÄISCHE PATENTSCHRIFT

(11) **EP 1 723 782 B1**
(45) Veröffentlichungstag und Bekanntmachung des Hinweises auf die Patenterteilung: **25.08.2010**
(21) Anmeldenummer: 04803904.4
(22) Anmeldetag: 15.12.2004
(51) Int. Cl.: G03B 5/02, G03B 5/06, H04N 5/225, B60R 1/00

(54) **Kameraanordung und Verfahren zur Justierung eines Objektivs in bezug auf den Bildsensor**
Camera assembly and method of adjusting the lens with respect to the image sensor
Ensemble caméra et procédé d'ajustement de l'objectif par rapport au capteur d'image

(30) Priorität: 17.12.2003 DE 10359193
(43) Veröffentlichungstag der Anmeldung: 22.11.2006
(73) Patentinhaber: Hella KGaA Hueck & Co., 59552 Lippstadt (DE)
(72) Erfinder: ADAMECK, Markus, 59555 Lippstadt (DE); MAKARUK, Michael, 59555 Lippstadt (DE); SCHULTE, Michael, 33106 Paderborn (DE)
(86) Internationale Anmeldenummer: PCT/EP2004/014285
(87) Internationale Veröffentlichungsnummer: WO 2005/060240

(56) Entgegenhaltungen:
- DE-A1- 4 419 910
- GB-A- 2 005 862
- US-A- 4 185 903
- US-A- 5 129 717
- US-A- 5 467 228
- PATENT ABSTRACTS OF JAPAN Bd. 2000, Nr. 24, 11. Mai 2001 (2001-05-11) & JP 2001 184449 A (DENSO CORP), 6. Juli 2001 (2001-07-06)
- PATENT ABSTRACTS OF JAPAN Bd. 1998, Nr. 05, 30. April 1998 (1998-04-30) & JP 10 027236 A (RICOH CO LTD), 27. Januar 1998 (1998-01-27)
- PATENT ABSTRACTS OF JAPAN Bd. 010, Nr. 264 (P-495), 9. September 1986 (1986-09-09) & JP 61 088240 A (MAMIYA KOKI KK), 6. Mai 1986 (1986-05-06)

## Beschreibung

Die vorliegende Erfindung betrifft einer Kameraanordnung gemäß dem Oberbegriff des Anspruchs 1, sowie ein Verfahren zur Justierung einer Kameraanordnung nach Anspruch 6.

### STAND DER TECHNIK

Eine Kameraanordnung der zuvor genannten Art ist aus der DE 101 15 043 A1 bekannt. Hier wird ein Verfahren und eine Vorrichtung zur Kalibrierung eines Kamerasystems, insbesondere eines auf einem Fahrzeug angeordneten Kamerasystems beschrieben, mit dem die Kalibrierung der Kamera in einem Kamera-Koordinatensystem in Bezug auf ein Referenz-Kamerasystem auf einfache Weise ermöglicht werden soll.

Es handelt sich hierbei jedoch ausschließlich um eine Justierung bzw. Ausrichtung der Kamera innerhalb der zuvor genannten Koordinatensysteme, insbesondere um eine Ausrichtung auf einen vorgegebenen.Punkt im Raum. Eine geeignete Justierung des Objektivs zu dem in der Kamera verwendeten Bildchip, beispielsweise um die notwendige homogene Bildschärfe der Kamera sicherzustellen, wird hier nicht vorgeschlagen.

Die im Bereich der Fahrzeugtechnik eingesetzten Kameraanordnungen müssen werksseitig auf eine optimale Bildschärfe eingestellt werden. Hierbei muss berücksichtigt werden, dass es sich nicht um Kameras handelt, wie sie beispielsweise im Bereich von professionellen Videoaufnahmen eingesetzt werden, sondern um Kleinkameras, die mit einem kleinen, meist flächigem Bildsensor sowie einem Objektiv ausgestattet sind, wobei das Objektiv über ein Anschlussmittel mit dem Bildsensor verbunden ist. Zur Einstellung der geforderten Bildschärfe ist vorgesehen, dass der Abstand des Objektivs zu dem Bildsensor so lange verändert wird, bis der Bildsensor ein Bild ausreichender Schärfe liefert. Es ist jedoch zu beachten, dass bei den bekannten Kameraanordnungen mit einer Verkippung des Bildsensors (vom Sollwert abweichende Neigung des Bildsensors zur Leiterplattenebene) zu rechnen ist. Dabei liegen Werte um 2 Grad durchaus im zulässigen Toleranzbereich. Als Konsequenz hieraus ergibt sich jedoch, dass beispielsweise bei einem bildseitigen Schärfebereich von ca. 0,05 mm, einer Brennweite f = 2 mm und bei einer Blende von 2,0, die Verkippung des Bildsensors um 2 Grad dazu führt, dass nur ein Teil der gesamten Bildsensorfläche scharf gestellt werden kann. Der übrige Teil bzw. Bildabschnitt bleibt unscharf.

Hier setzt die vorliegende Erfindung an und macht es sich zur Aufgabe eine Kameraanordnung bereitzustellen, die trotz Verkippungen des Bildsensors im gesamten Bildbereich scharf eingestellt werden kann.

Aus der JP 63-271305 A ist eine Kameraanordnung nach dem Oberbegriff des Anspruchs 1 bekannt. Ein Justage verfahren mit dem Schnitten albisel des Anspruchs 6 ist aus der JP 2001-184449 A bekannt.

### VORTEILE DER ERFINDUNG

Erfindungemäß wird die o.g. Aufgabe dadurch gelöst, dass es sich bei dem Anschlussmittel um einen oder mehrere endseitig des Objektives vorgesehene kugelsegmentförmige Gehäuseabschnitt(e) handelt, die in einer zylindrischen Bohrung des Objektivträgers aufgenommen sind, wobei das Anschlussmittel dazu geeignet ist, das Objektiv relativ zu dem Bildsensor zu verschieben, als auch zu verschwenken. Durch diese Ausgestaltung des Anschlussmittels wird es ermöglicht, dass das Objektiv optimal an die Lage des Bildsensors angepasst werden kann, d.h. es kann eine homogene Schärfe über den gesamten Bildsensorbereich sichergestellt werden.

In einer vorteilhaften Ausgestaltung der vorliegenden Erfindung ist vorgesehen, dass der kugelsegmentförmige Gehäuseabschnitt und die zylindrische Bohrung über eine Spielpassung gegeneinander verschiebbar und verschwenkbar gelagert sind. Durch diese Maßnahme kann sichergestellt werden, dass eine geeignete Verbindung zwischen dem kugelsegmentförmigen Gehäuseabschnitt und der zylindrischen Bohrung besteht. Durch diese Verbindung wird insbesondere eine spätere Verbindung der zuvor genannten Komponenten, beispielsweise durch Laserschweißen oder Kleben, begünstigt. Darüber hinaus kann das Objektiv vollständig von einer geeigneten Vorrichtung während des Justageprozesses geführt werden.

Es ist weiterhin vorteilhafterweise vorgesehen, dass das Objektiv, die Leiterplatte mit dem Bildsensor und dem Objektivträger in einem Gehäuse untergebracht sind. Hierdurch lässt sich eine kompakte und unempfindliche Bauweise der Kameraanordnung sicherstellen.

In einer vorteilhaften Ausgestaltung der vorliegenden Erfindung ist vorgesehen, dass der kugelsegmentförmige Abschnitt dem Objektiv angespritzt bzw. mit dem Objektiv verklebt ist. Neben der Einstückigkeit der zuvor genannten Komponenten kann sichergestellt werden, dass beispielsweise handelsübliche und kostengünstige Objektive mit einem erfindungsgemäßen kugelsegmentförmigen Abschnitt ausgestattet werden können. So kann beispielsweise auch für das Objektiv bzw. das Objektivgehäuse ein von dem kugelsegmentförmigen Abschnitt abweichendes Material verwendet werden.

Es kann weiterhin vorteilhafterweise vorgesehen sein, dass der Objektivträger aus einem Material besteht, welches für Laserstrahlung durchlässig ist. Hierdurch wird ein Verbindungsprozess zwischen dem Objektivträger und dem Objektiv nach Beendigung des Justageprozesses begünstigt, indem ein Laserstrahl nur das Material des Objektivs bzw. des kugelsegmentförmigen Abschnitts aufschmilzt um eine Verbindung mit dem Objektivträger herzustellen.

Eine weitere Aufgabe der vorliegenden Erfindung liegt darin, ein Verfahren zur Justierung einer erfindungsgemäßen Kameraanordnung vorzuschlagen, wobei sichergestellt werden soll, dass ein scharfes Bild über den gesamten Bildsensorbereich ausgegeben wird.

Erfindungsgemäß wird diese Aufgabe durch ein Verfahren mit den Verfahrensschritten des Anspruchs 6 gelöst. Durch ein Einbringen des Objektivs in den Objektträger in einer vorbestimmten Anfangsposition W₁, einem Auslesen der Bildsensorinformationen und Bestimmung der Kontrastwerte in vorbestimmten Bildbereichen, Bestimmung eines gewichteten Mittelwertes der Kontrastwerte und Speichern des gewichteten Mittelwertes verknüpft mit der jeweiligen Wegstreckenposition Wₙ in einer Auswerteeinrichtung, einem Verschieben des Objektivs um einen Wegstreckenabschnitt Δz in Richtung des Bildsensors, einem Wiederholen der letzten Verfahrensschritte bis der kugelsegmentförmige Gehäuseabschnitt eine vorbestimmte Endposition W_{Ende} erreicht, einem Verschieben des Objektivs in die Wegstreckenposition Wₘₐₓ in welcher der Wert der gespeicherten gewichteten Mittelwerte maximal ist, einem Verschwenken des Objektivs in eine vorbestimmte erste Anfangsschwenkposition S_{α1}, einem Auslesen der Bildsensorinformationen und Bestimmung der Kontrastwerte in vorbestimmten Bildbereichen, Bestimmung eines gewichteten Mittelwertes der Kontrastwerte und Speichern des gewichteten Mittelwertes verknüpft mit der jeweiligen Schwenkposition S_{αn} in einer geeigneten Auswerteeinrichtung, einem Verschwenken des Objektivs um einen Schwenkwinkel Δα in eine vorbestimmte erste Schwenkrichtung a, einem Wiederholen der letzten Verfahrensschritte bis eine vorbestimmte erste Endposition S_{αEnd} erreicht ist, einem Verschwenken des Objektivs in die Schwenkposition S_{αmax} in welcher der Wert der gespeicherten gewichteten Mittelwerte maximal ist, einem Verbinden des kugelsegmentförmigen Gehäuseabschnitts mit der zylindrischen Bohrung, kann sichergestellt werden, dass das Objektiv gleichmäßig ein Bild auf den Bildsensor abgebildet, d.h. die optische Achse des Objektivs stimmt mit dem mittigen Normalenvektor des Bildsensors überein und es ist mit einem gleichmäßig scharfen Bild zu rechnen. Eine Neigung des Bildsensors kann somit ausgeglichen werden.

In einer vorteilhaften Weiterentwicklung des erfindungsgemäßen Verfahrens sind vor dem Verbinden der zylindrischen Bohrung mit dem kugelsegmentförmigen Gehäuseabschnitt nachfolgende Verfahrensschritte vorgesehen, die eine noch genauere Justierung des Objektivs ermöglichen. Durch ein Verschwenken des Objektivs in eine zu der Schwenkrichtung a orthogonale Schwenkrichtung b in eine zweite Ausgangsschwenkposition S_{β1}, einem Auslesen der Bildsensorinformationen und Bestimmung der Kontrastwerte in vorbestimmten Bildbereichen, Bestimmung eines gewichteten Mittelwertes der Kontrastwerte und Speichern des gewichteten Mittelwertes verknüpft mit der jeweiligen Schwenkposition S_{βn} in einer geeigneten Auswerteeinrichtung, einem Verschwenken des Objektivs um einen Schwenkwinkel Δβ entgegengesetzt der zweiten Schwenkrichtung b, einem Wiederholen der letzten Verfahrensschritte bis eine vorbestimmte zweite Endposition S_{βEnd} erreicht ist, einem Verschwenken des Objektivs in die Schwenkposition S_{βmax} in welcher der Wert der zuvor gespeicherten gewichteten Mittelwerte maximal ist, kann eine noch genauere Anpassung des Objektivs an einen Neigung des Bildsensors vorgenommen werden.

In einer weiteren vorteilhaften Ausgestaltung des erfindungsgemäßen Verfahrens kann vorgesehen sein, dass es sich bei den auszulesenden Bildsensorinformationen um diejenigen Bildpunkte handelt, die auf einem Radius R = ¼ * der Breite des Bildes um das zu erwartende Bildzentrum liegen. Diese Punkteschar eignet sich unter anderem besonders gut um einen repräsentativen Mittelwert der Kontrastwerte zu bilden.

Es kann weiterhin vorteilhafterweise vorgesehen sein, dass die Kontrastwerte über die Modulationstransferfunktion bestimmt werden.

Vorteilhafterweise kann vorgesehen sein, dass der kugelsegmentförmigen Gehäuseabschnitts und die zylindrischen Bohrung durch Laserschweißen oder Verkleben miteinander verbunden werden. Diese Verfahren haben sich als besonders rationelle und einfach handhabbare Verfahren zur Verbindung der zuvor genannten Komponenten erwiesen. Denkbar bleiben jedoch auch andere Verbindungsmechanismen, wie beispielsweise Verschraubungen.

Es kann weiterhin vorteilhafterweise vorgesehen sein, dass es sich bei den ermittelten Kontrastwerten um jeweils voneinander unabhängige Kontrastwerte für die Farbwerte rot, grün und blau handelt. Hierdurch wird die Möglichkeit geschaffen, eine Einstellung entsprechend der Wahrnehmung des menschlichen Auges vorzunehmen und die Bildqualität der Kameraanordnung weiterhin zu verbessern.

In einer besonders vorteilhaften Ausgestaltung der vorliegenden Erfindung kann vorgesehen sein, dass die Farbwerte mit einem Faktor gewichtet werden, wobei die grünen Kontrastwerte stärker gewichtet werden als die roten Kontrastwerte und die roten Kontrastwerte stärker als die blauen Kontrastwerte. Mit diesem Einstellungsschema wird die Kameraanordnung besonders gut an die Wahrnehmung des menschlichen Auges angepasst.

### ZEICHNUNGEN

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine erfindungsgemäße Kameraanordnung in einer teilweise geschnittenen perspektivischen Ansicht;
- Fig. 2: eine erfindungsgemäße Kameraanordnung in einer perspektivischen Ansicht;

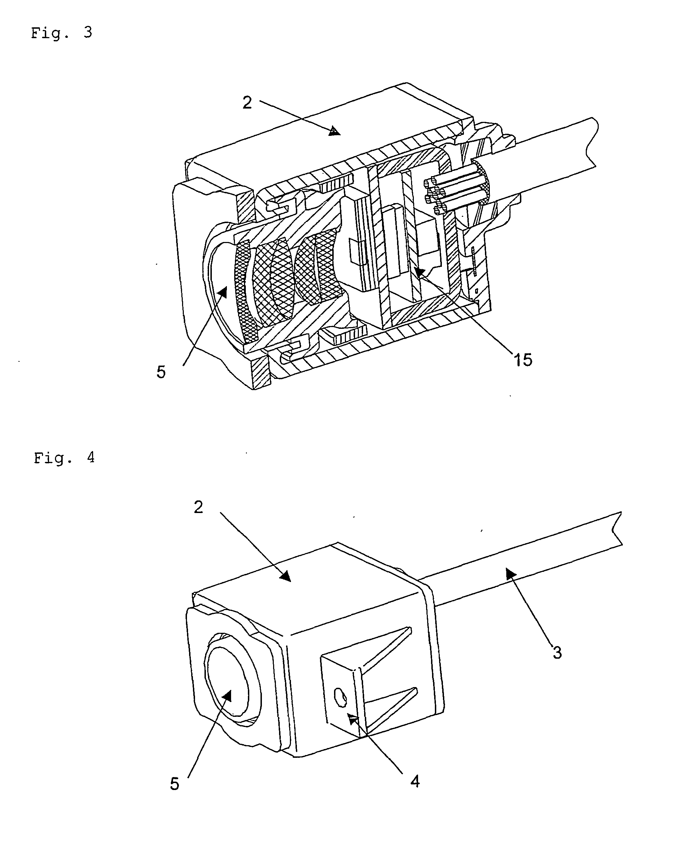

- Fig. 3: eine geschnittene Darstellung einer erfindungsgemäßen Kameraanordnung in einem Gehäuse;
- Fig. 4: eine erfindungsgemäße Kameraanordnung in einem Gehäuse;

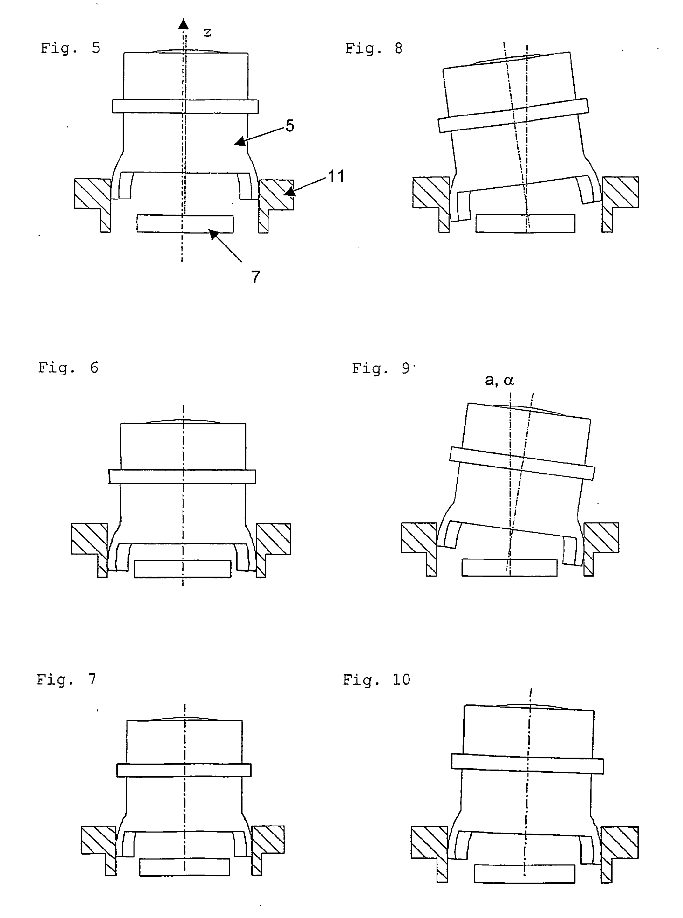

- Fig. 5 bis 10: eine schematische Darstellung einzelner Verfahrensschritte des erfindungsgemäßen Verfahrens zur Justierung einer erfindungsgemäßen Kameraanordnung.

### BESCHREIBUNG DER AUSFÜHRUNGSBEISPIELE

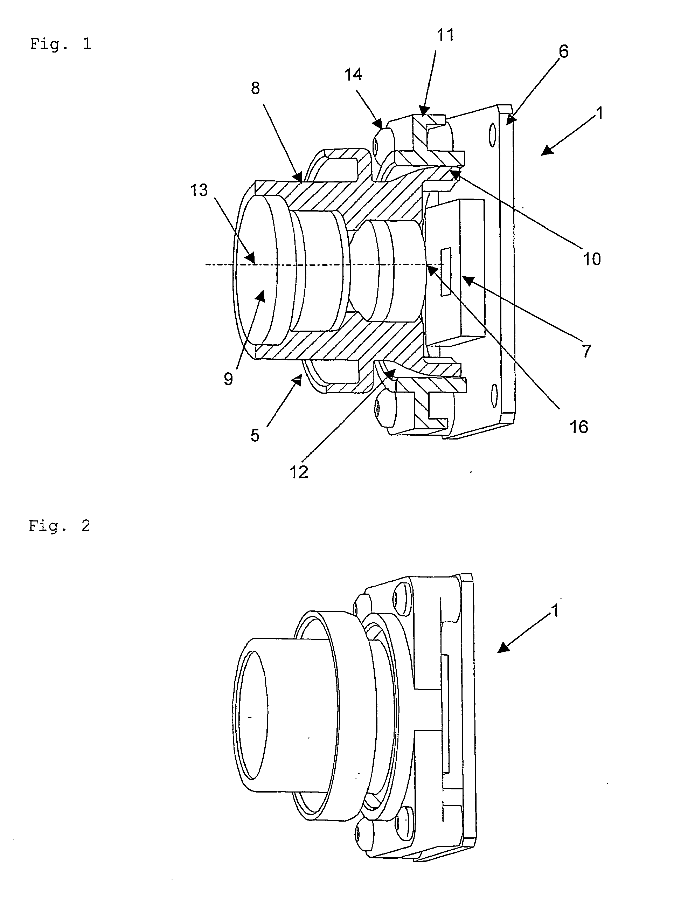

Zunächst wird auf Fig. 1 bezug genommen.

Eine erfindungsgemäße Kameraanordnung 1 umfasst im wesentlichen eine Leiterplatte 6, auf der etwa mittig ein flächiger Bildsensor 7 mit einer sensitiven Fläche aufgebracht ist. Vor dem Bildsensor 7 ist ein Objektiv 5 angeordnet, welches im Idealfall ein scharfes Bild über die gesamte sensitive Fläche des Bildsensors 7 projiziert. Dieser Fall tritt ein, wenn die nachfolgenden Bedingungen erfüllt sind.

Das Objektiv 5 umfasst ein im wesentlichen zylinderförmiges Objektivgehäuse 8, in dem jeweils geeignete Linsen 9 entlang einer optischen Achse 13 aufgereiht sind. Die optische Achse 13 geht in dieser bevorzugten Ausführungsform, da es sich um rotationssymmetrische Linsen 9 handelt, durch die Linsenmittelpunkte. Ein scharfes Bild über die gesamte Bildsensorfläche entsteht, wenn das Objektiv 5 den richtigen Abstand zu dem Bildsensor 7 einnimmt, sowie wenn die optische Achse 13 senkrecht auf das Zentrum des Bildsensors 7 fällt, mit anderen Worten, wenn ein mittig des Bildsensors 7 angeordneter Normalenvektor 16 mit der optischen Achse 13 übereinstimmt. Um diesen Zustand herstellen zu können ist erfindungsgemäß ein Anschlussmittel zwischen Objektiv 5 und Leiterplatte 6 vorgesehen, welches wie nachfolgend beschrieben ausgestaltet ist.

Das Objektiv 5 ist mit einem Objektivträger 11 auf der Leiterplatte 6 befestigt. Der Objektivträger 11 selbst ist mit Schrauben 14 auf der Leiterplatte 6 angebracht und weist eine mittig angeordnete zylindrische Bohrung 12 auf. Der Objektivträger 11 kann aus einem Material gefertigt sein, welches für Laserstrahlung durchlässig ist. Das Objektivgehäuse 8 wiederum ist endseitig mit einem kugelsegmentförmigen Gehäuseabschnitt 10 ausgestattet, der in die zylindrische Bohrung 12 eingebracht werden kann, wobei die Kanten des kugelsegmentförmigen Gehäuseabschnittes 10 an der zylindrischen Bohrung 12 im Rahmen einer Spielpassung anliegen, d.h. es ist ein geringes Spiel zwischen dem kugelsegmentförmigen Gehäuseabschnitt 10 und der zylindrischen Bohrung 12 vorgesehen, so dass eine Verschiebung des Objektivs 5 entlang der zylindrischen Bohrung 12, als auch ein Schwenken des Objektivs 5 in einen gewünschten Winkel zwischen dem Normalenvektor 16 und der optischen Achse 13 möglich wird.

Bei dem Objektiv 5 kann es sich beispielsweise um ein handelsübliches Objektiv handeln, welches grundsätzlich in großen Stückzahlen erhältlich ist. In einem besonderen Arbeitgang wird das Objektiv 5, bzw. des Objektivgehäuse 8 mit dem entsprechenden kugelsegmentförmigen Gehäuseabschnitt 10, beispielsweise durch Aufspritzen oder Verkleben hergestellt. Als Material für den kugelsegmentförmigen Gehäuseabschnitt 10 kommt beispielsweise Kunststoff in Frage, wohingegen das Objektiv 5 aus Metall bestehen kann. Auch kann das Objektiv 5 samt dem kugelsegmentförmigen Gehäuseabschnitt 10 einstückig hergestellt worden sein.

Des weiteren sind die zuvor genannten Komponenten in einem kompakten Gehäuse 2 untergebracht, in dem darüber hinaus auch eine Leiterplatte 15 für die Kameraelektronik integriert sein kann. Aus dem Gehäuse 2 ist eine Anschlussleitung 3 herausgeführt und es sind Befestigungselemente 4 vorgesehen, die einen Einbau der Kameraanordnung 1 in ein Kraftfahrzeug erlauben.

Beim Justageprozess der Kameraanordnung 1 wird das Objektiv 5 in den Objektivträger 11 montiert und in Richtung der optischen Achse 13, nachfolgend Z-Achse genannt, aus einer Anfangsposition W₁ so lange verschoben, bis Bereiche des Bildsensors 7 scharf gestellt sind. Aus Gründen der Fertigung und der Messtechnik kann die optimale Position der Schärfentiefe nicht direkt bestimmt werden. Daher wird zur Ermittlung der Position des Objektives 5 die Kameraanordnung 1 auf ein Testbild ausgerichtet und anschließend das Bild des Bildsensors 7 bzw. das Bild der Kameraanordndung 1 ausgelesen und mit einer Auswertesoftware in einer Auswerteeinrichtung (beispielsweise Personal Computer) analysiert. Für die Bestimmung der Abbildungsqualität des Objektivs 5 wird mit der Auswerteeinrichtung die MFT (Modulationstransferfunktion, der Kontrast) in einigen Bildbereichen bestimmt. Nach Auswertung des Kamerabildes wird das Objektiv 5 entlang der optischen Achse 13 von der Anfangsposition W₁ um eine Wegstrecke Δz in eine weitere Wegstreckenposition Wₙ verschoben und die Abbildungsqualität erneut bestimmt. Der Vorgang wiederholt sich so lange, bis das Objektiv 5 die optimale Position durchfahren hat und die Endposition W_{Ende} erreicht ist. Im wesentlichen handelt es sich bei der Anfangsposition W₁ um eine Position, in welcher der kugelsegmentförmige Gehäuseabschnitte 10 an der oberen Kante der zylindrischen Bohrung 12 anliegt und bei der Endposition W_{Ende} um diejenige Position, bei welcher der kugelsegmentförmigen Gehäuseabschnittes 10 an dem unteren Ende der zylindrischen Bohrung 12 anliegt. Grundsätzlich ist es erfahrungsgemäß nicht notwendig, die zuvor beschriebenen Extrempositionen anzufahren. Sie dienen lediglich als Orientierungspositionen um das erfindungsgemäße Verfahren zu veranschaulichen. Auch ist es grundsätzlich möglich, das Objektiv vom unteren Ende zum oberen Ende der zylindrischen Bohrung 12 zu verfahren.

Basierend auf den ermittelten Kontrastwerten der Wegstreckenpositionen Wₙ wird hieraus ein gewichteter Mittelwert errechnet, welcher mit der jeweiligen Wegstreckenposition verknüpft ist. Die Wichtung kommt dadurch zustande, dass jeder Kontrastwert abhängig von seiner Bildposition mit einem vorbestimmten Wichtungsfaktor multipliziert wird. Durch die Wichtung können bevorzugte Bildpunkte stärker in den jeweils zu bestimmenden gewichteten Mittelwert eingehen.

Entsprechend wird das Objektiv in die Wegstreckenposition Wₘₐₓ mit dem höchsten (besten) gewichteten Mittelwert zurückgefahren. Es ist auch denkbar, dass eine Position Wₘₐₓ angefahren wird, die zwischen den zuvor angefahrenen Wegstreckenpositionen Wₙ liegt, wenn beispielsweise ein Interpolationsverfahren auf die gewichteten Mittelwerte angewendet wurde.

Anders ausgedrückt, soll die Position die optimale Position sein, bei welcher der mittlere Kontrast an vorherbestimmten Bildpositionen maximal ist bzw. bei der die mittlere quadratische Abweichung vom höchsten Kontrastwert minimal wird. Damit ist die Z-Position des Objektives 5 festgelegt.

Es ist anzumerken, dass zur Bestimmung des Kontrastes die Orte im Bild verwendet werden, die auf dem Radius R um das zu erwartende Bildzentrum liegen, für die gilt R = ¼ * Breite des Bildes. Darüber hinaus ist es vorteilhaft, ebenfalls die Bildmitte und die Bildränder zur Kontrastbestimmung heranzuziehen.

Im Anschluss daran wird das Objektiv 5 um den Drehpunkt des kugelsegmentförmigen Gehäuseabschnittes 10 verdreht, bis die optische Achse 13 des Objektivs 5 und der Normalenvektor 16 des Bildsensors 7 zusammenfallen, d.h. das Objektiv 5 wird um ein oder zwei zueinander orthogonale Verkippungsachsen (α, β-Achse) (abhängig von der bildseitigen Schärfentiefe) justiert.

Hierzu wird zunächst eine Anfangsschwenkposition S_{α1} angefahren und der gewichtete Mittelwert der Kontrastwerte analog zu dem oben aufgeführten Verfahren bestimmt, der jeweiligen Schwenkposition zugeordnet und in der Auswerteeinrichtung zwischengespeichert.

Anschließend wird das Objektiv 5 um einen Betrag Δα in eine vorbestimmte Schwenkrichtung a verschwenkt und die Kontrastwerte erneut ausgelesen, der gewichtete Mittelwert gebildet, der jeweiligen Schwenkposition zugeordnet und zwischengespeichert.

Letztendlich wird das Objektiv 5 in diejenige Schwenkposition S_{αmax} zurückverfahren, bei welcher der gewichtete Mittelwert der Kontrastwerte maximal ist, bzw. bei der die mittlere quadratische Abweichung (Fehler) vom Maximum des Kontrastes minimal wird.

Erfahrungsgemäß kann das Objektiv 5 mit den zuvor beschriebenen Verfahrensschritten in ausreichendem Maße derart ausgerichtet werden, dass die optische Achse 13 des Objektivs 5 mit dem mittigen Normalenvektor 16 des Bildsensors 7 überwiegend zusammenfällt.

Zur weiteren Optimierung kann vorgesehen sein, dass das Objektiv 5 um eine zu der Schwenkrichtung a orthogonale Schwenkrichtung b geschwenkt wird und dabei die gleichen Verfahrensschritte wie bei der Schwenkrichtung a wiederholt werden.

In einem weiteren vorteilhaften Montageschritt kann die Position des Objektivs 5 erneut um die Z-Achse variiert und der Ort mit dem Kontrastmaximum in vorherbestimmten Positionen im Bild aufgesucht werden.

In der so justierten Lage wird das Objektiv 5 mit dem Objektivträger 11 lasergeschweißt.

Sofern es sich bei der Kameraanordnung um ein Farbkamerasystem handelt, werden bei jedem Schritt jeweils drei voneinander unabhängige Kontrastwerte für Rot, Grün und Blau bestimmt. Entsprechend der Wahrnehmung des menschlichen Auges werden primär die grünen Kontrastwerte stärker gewichtet als die roten und stärker als die blauen Kontrastwerte.

## Patentansprüche

1. Kameraanordnung (1), insbesondere zur Verwendung in einem Kraftfahrzeug, umfassend,
- eine Leiterplatte (6) mit einem Bildsensor (7) und einem Objektivträger (11), sowie
- ein Objektiv (5) zur Projizierung eines Bildes auf den Bildsensor (7), wobei
- das Objektiv (5) über Anschlussmittel mit dem Objektivträger (11) verbunden ist,
**dadurch gekennzeichnet, dass**
es sich bei dem Anschlussmittel um einen oder mehrere endseitig des Objektives (5) vorgesehenen kugelsegmentförmige(n) Gehäuseabschnitt (e) (10) handelt, die in einer zylindrischen Bohrung (12) des Objektivträgers (11) aufgenommen sind, wobei das Anschlussmittel dazu geeignet' ist, das Objektiv (5) relativ zu dem Bildsensor (7) sowohl zu verschieben, als auch zu verschwenken.

2. Kameraanordnung nach Anspruch 1, **dadurch gekennzeichnet, dass** der kugelsegmentförmige Gehäuseabschnitt (10) und die zylindrische Bohrung (12) über eine Spielpassung gegeneinander verschiebbar und verschwenkbar gelagert sind.

3. Kameraanordnung nach Anspruch 1 oder 2, **dadurch gekennzeichnet, dass** das Objektiv (5), die Leiterplatte (6) mit dem Bildsensor (7) und dem Objektivträger (11) in einem Gehäuse (2) untergebracht sind.

4. Kameraanordnung nach einem der Ansprüche 1 bis 3, **dadurch gekennzeichnet, dass** der kugelsegmentförmige Abschnitt (10) dem Objektiv (5) angespritzt bzw. mit dem Objektiv (5) verklebt ist.

5. Kameraanordnung nach einem der Ansprüche 1 bis 4, **dadurch gekennzeichnet, dass** der Objektivträger (11) aus einem Material besteht, welches für Laserstrahlung durchlässig ist.

6. Verfahren zur Justierung einer Kameraanordnung nach einem der Ansprüche 1 bis 5, **gekennzeichnet durch** folgende Verfahrensschritte:
a) Einbringen des Objektivs (5) in den Objektträger (11) in einer vorbestimmten Anfangsposition W₁;
b) Auslesen der Bildsensorinformationen und Bestimmung der Kontrastwerte in vorbestimmten Bildbereichen, Bestimmung eines gewichteten Mittelwertes der Kontrastwerte und Speichern des gewichteten Mittelwertes verknüpft mit der jeweiligen Wegstreckenposition Wₙ in einer Auswerteeinrichtung;
c) Verschieben des Objektivs (5) um einen Wegstreckenabschnitt Δz in Richtung des Bildsensors (7) ;
d) Wiederholen der Verfahrensschritte b) und c) bis der kugelsegmentförmige Gehäuseabschnitt (10) eine vorbestimmte Endposition W_{Ende} erreicht;
e) Verschieben des Objektivs (5) in die Wegstreckenposition Wₘₐₓ in welcher der Wert der gespeicherten gewichteten Mittelwerte maximal ist;
f) Verschwenken des Objektivs (5) in eine vorbestimmte erste Anfangsschwenkposition S_{α1};
g) Auslesen der Bildsensorinformationen und Bestimmung der Kontrastwerte in vorbestimmten Bildbereichen, Bestimmung eines gewichteten Mittelwertes der Kontrastwerte und Speichern des gewichteten Mittelwertes verknüpft mit der jeweiligen Schwenkposition S_{αn} in einer geeigneten Auswerteeinrichtung;
h) Verschwenken des Objektivs (5) um einen Schwenkwinkel Δα in eine vorbestimmte erste Schwenkrichtung a;
i) Wiederholen der Verfahrensschritte g) und h) bis eine vorbestimmte erste Endposition S_{αEad} erreicht ist;
j) Verschwenken des Objektivs (5) in die Schwenkposition S_{αmax} in welcher der Wert der gespeicherten gewichteten Mittelwerte maximal ist;
k) Verbinden des kugelsegmentförmigen Gehäuseabschnitts (10) mit der zylindrischen Bohrung (12).

7. Verfahren zur Justierung einer Kameraanordnung nach Anspruch 6, **dadurch gekennzeichnet, dass** weiterhin nachfolgende Verfahrensschritte zwischen dem Verfahrensschritt j) und k) vorgesehen sind:
j₁) Verschwenken des Objektivs (5) in eine zu der Schwenkrichtung a orthogonale Schwenkrichtung b in eine zweite Ausgangsschwenkposition S_{β1};
j₂) Auslesen der Bildsensorinformationen und Bestimmung der Kontrastwerte in vorbestimmten Bildbereichen, Bestimmung eines gewichteten Mittelwertes der Kontrastwerte und Speichern des gewichteten Mittelwertes verknüpft mit der jeweiligen Schwenkposition Sβₙ in einer geeigneten Auswerteeinrichtung;
j₃) Verschwenken des Objektivs (5) um einen Schwenkwinkel Δβ entgegengesetzt der zweiten Schwenkrichtung b;
j₄) Wiederholen der Verfahrensschritte j₂) und j₃) bis eine vorbestimmte zweite Endposition S_{βEnd} erreicht ist.
j₅) Verschwenken des Objektivs (5) in die Schwenkposition S_{βmax} in welcher der Wert der zuvor gespeicherten gewichteten Mittelwerte maximal ist.

8. Verfahren zur Justierung einer Kameraanordnung nach Anspruch 6 oder 7, **dadurch gekennzeichnet, dass** es sich bei den vorbestimmten Bildbereichen mindestens um diejenigen Bildpunkte handelt, die auf einem Radius R = ¼ * der Breite des Bildes um das zu erwartende Bildzentrum liegen.

9. Verfahren zur Justierung einer Kameraanordnung nach einem der Ansprüche 6 bis 8, **dadurch gekennzeichnet, dass** die Kontrastwerte über die Modulationstransferfunktion bestimmt werden.

10. Verfahren zur Justierung einer Kameraanordnung nach einem der Ansprüche 6 bis 9, **dadurch gekennzeichnet, dass** der kugelsegmentförmigen Gehäuseabschnitts (10) und die zylindrischen Bohrung (12) durch Laserschweißen oder Verkleben miteinander verbunden werden.

11. Verfahren zur Justierung einer Kameraanordnung nach einem der Ansprüche 6 bis 10, **dadurch gekennzeichnet, dass** es sich bei den ermittelten Kontrastwerten um jeweils voneinander unabhängige Kontrastwerte für die Farbwerte rot, grün und blau handelt.

12. Verfahren zur Justierung einer Kameraanordnung nach einem der Ansprüche 6 bis 11, **dadurch gekennzeichnet, dass** die Farbwerte mit einem Faktor gewichtet werden, wobei die grünen Kontrastwerte stärker gewichtet werden als die roten Kontrastwerte und die roten Kontrastwerte stärker als die blauen Kontrastwerte.

## Claims

1. Camera arrangement (1), especially for use in a motor vehicle, comprising
- a printed circuit board (6) with an image sensor (7) and a lens carrier (11), as well as
- a lens (5) for the projection of an image on the image sensor (7), wherein
- the lens (5) is connected to the lens carrier (11) with an means of connection/adapter,
**characterized in that**
the means of connection/ adapter consists of one or several spherical segment-shaped housing sections (e) (10) arranged at the end of the lens (5), which are seated in a cylindrical bore (12) of the lens carrier (11), wherein the means of connection/ adapter is suitable for the sliding as well as the swiveling of the lens (5) relative to the image sensor (7).

2. Camera arrangement following claim 1, **characterized in that** the spherical segment-shaped housing section (10) and the cylindrical bore (12) are supported in a slidable and swivelable manner by means of a running fit.

3. Camera arrangement following claim 1 or 2, **characterized in that** the lens (5), the printed circuit board (6) with the image sensor (7) and the lens carrier (11) are accommodated in a housing (2).

4. Camera arrangement following claims 1 to 3, **characterized in that** the spherical segment-shaped section (10) is molded onto the lens (5) or glued onto the lens (5).

5. Camera arrangement following claims 1 to 3, **characterized in that** the lens carrier (11) is made from a material penetrable for laser beams.

6. Process for the adjustment of a camera arrangement following one of the claims 1 to 5, **characterized by** the following process steps:
a) Insertion of the lens (5) into the lens carrier (11) in a predefined starting position W₂;
b) Reading out of the image sensor information and determination of the contract values in predefined image regions, definition of a weighted average of the contrast values and storing of the weighted average, linked with the respective travel position W₂ in an evaluation unit;
c) Sliding/ rearranging of the lens (5) by a travel section Δz toward the image sensor (7);
d) Repetition of the process steps b) and c) until the spherical segment-shaped housing section (10) has reached a predefined end position W_{End};
e) Sliding of the lens (5) into the travel position Wₘₐₓ, in which the value of the stored weighted averages is maximal;
f) Swiveling of the lens (5) in a predefined first initial swivel position S_{α1};
g) Reading out of the image sensor information and determination of the contrast values in predetermined image regions, determination of a weighted average of the contrast values and storing of the weighted average linked with the respective swivel position S_{αn} in a suitable evaluation unit.
h) Swiveling of the lens (5) around a swivel angle Δ_{α} into a predefined first swivel position a;
i) Repetition of the process steps g) and h) until a predefined first end position S_{αEnd} has been reached;
j) Swiveling of the lens (5) into the swivel position S_{αmax} in which the value of the stored, weighted averages is maximal;
k) Connection of the spherical segment-shaped housing section (10) with the cylindrical bore (12).

7. Process for the adjustment of a camera arrangement following claim 6, **characterized in that** the following process steps are provided between process step j) and process step k):
j₁) Swiveling of the lens (5) in a swivel direction b orthogonal to swivel direction a into a second initial swivel position S_{β1} ;
j₂) Reading out of the image sensor information and determination of the contrast values in predetermined image regions, determination of a weighted average of the contrast values and storing of the weighted average linked with the respective swivel position S_{βn} in a suitable evaluation unit;
j₃) Swiveling of the lens (5) around a swivel angle Δβ opposed to the second swivel direction b;
j₄) Repetition of the process steps j₂) and j₃) until a predefined first end position S β_{End} has been reached;
j₅) Swiveling of the lens (5) into the swivel position S _{βmax} in which the value of the previously stored, weighted averages is maximal.

8. Process for the adjustment of a camera arrangement following claim 6 or 7, **characterized in that** the predetermined image regions are at least those image points which lie on a radius = ¼ * of the width of the image around the image center to be expected.

9. Process for the adjustment of a camera arrangement following one of the claims 6 to 8, **characterized in that** the contrast values are determined via the modulation transfer function.

10. Process for the adjustment of a camera arrangement following one of the claims 6 to 9, **characterized in that** the spherical segment-shaped housing section (10) and the cylindrical bore (12) are connected to one another by means of laser welding or gluing.

11. Process for the adjustment of a camera arrangement following one of the claims 6 to 9, **characterized in that** the determined contrast values are contrast values independent from one another for the color values red, green and blue.

12. Process for the adjustment of a camera arrangement following one of the claims 6 to 10, **characterized in that** the color values are weighted with a factor, wherein the green contrast values are weighted more than the red contrast values und the red contrast values are weighted more than the blue contrast values.

## Revendications

1. Installation à caméra (1) surtout pour l'application dans un véhicule automobile comprenant
- un circuit électronique (6) avec un capteur d'image (7) et un dispositif porte-objectifs (11) et
- un objectif (5) pour projeter une image sur le capteur d'image (7) l'objectif (5) étant relié au dispositif porte-objectif (11) à l'aide des moyens de connexion,
**caractérisée en ce que**
le moyen de connexion se compose d'un ou de plusieurs partie(s) du boîtier sous ferme d'un segment sphérique (10) prévu(s) au bout de l'objectif qui se trouvent dans un perçage cylindrique (12) du dispositif porte-objectif (11), le moyen de connexion étant approprié non seulement à déplacer, niais encore à pivoter l'objectif (5) par rapport au capteur d'image (7).

2. Installation à caméra selon la revendication 1, **caractérisée en ce que** la partie du boîtier sous forme d'un segment sphérique (10) et le perçage cylindrique (12) sont réciproquement déplaçables et pivotables par un ajustement mobile.

3. Installation à caméra selon la revendication 1 ou 2, **caractérisée en ce que** l'objectif (5), le circuit électrique (6) avec le capteur d'image (7) et le dispositif porte-objectif (11) se trouvent dans un seul boîtier (2).

4. Installation à caméra selon une des revendications 1 à 3, **caractérisée en ce que** la partie sous forme d'un segment sphérique (10) est injectée sur l'objectif (5) respectivement collée sur l'objectif (5).

5. installation à caméra selon une des revendications 1 à 4, **caractérisée en ce que** le dispositif porte-objectif (11) se compose d'un matériau perméable aux rayons laser.

6. Méthode d'ajustage d'une installation à caméra selon une des revendications 1 à 5, **caractérisée par** les pas suivants de la méthode:
a) Mise en place de l'objectif (5) sur le dispositif porte-objectif (11) dans une position de début prédéterminée W₁,
b) Lecture de l'information du capteur d'image et détermination des valeurs de contraste dans les zones d'image prédétermnées, détermination d'une valeur moyenne pondérée des valeurs de contraste et mémorisation de la valeur moyenne pondérée liée à la position respective sur la route w₀ dans un dispositif d'exploitation.
c) Déplacement de l'objectif (5) d'une section de la route Δz dans la direction du capteur d'image (7).
d) Répétition des pas b) et c) de la méthode jusque la partie du boîtier sous forme d'un segment sphérique (10) atteint une position finale prédéterminée W_{Ende} (W_{fin}).
e) Déplacement de l'objectif (5) à la position de la route Wₘₐₓ dans laquelle la valeur des valeurs moyennes pondérées mémorisées se trouve au maximum.
f) Pivotement de l'objectif (5) dans une première position de début de pivotement prédéterminée S_{α1.}
g) Lecture de l'information du capteur d'image et détermination des valeurs de contraste dans les zones d'image prédéterminées, détermination d'une valeur moyenne pondérée des valeurs de contraste et mémorisation de la valeur moyenne pondérée liée à la position de pivotement S_{αn} respective dans un dispositif d'exploitation approprié.
h) Pivotement de l'objectif (5) autour d'un angle de pivotement Δα dans une première position de pivotement prédéterminée a.
i) Répétition des pas g) et h) jusqu'une première position finale prédéterminée S_{αEnd} (S_{αFin}) est atteinte.
j) Pivotement de l'objectif (5) à la position de pivotement S_{αmax} dans laquelle la valeur des valeurs moyennes pondérées mémorisées se trouve au maximum.
k) Relier la partie du boîtier sous forme d'un segment sphérique (10) avec le perçage cylindrique (12).

7. Méthode d'ajustage d'une installation à caméra selon la revendication 6, **caractérisée en ce que** les pas suivants sont encore prévu entre les pas de la méthode j) et k) ;
j₁) Pivotement de l'objectif (5) dans une direction de pivotement b orthogonale à la direction de pivotement a dans une deuxiéme direction de début de pivotement S_{β1.}
j₂) Lecture de l'nformation du capteur d'image et détermination des valeurs de contraste dans les zones d'image prédéterminées, détermination d'une valeur moyenne pondérée des valeurs de contraste et mémorisation de la valeur moyenne pondérée liée avec la position de pivotement. S_{β1} respective dans un dispositif d'exploitation approprié.
j₃) Pivotement de l'objectif (5) autour angle de pivotement Δβ opposé à la deuxième direction de pivotement b.
j₄) Répétition des pas de la méthode j₂) et j₃) jusqu'une deuxième positon finale prédéterminée S_{βEnd} (S_{βFin}) est atteinte.
j₅) Pivotement de l'objectif (5) à la position de pivotement S_{βmax} dans laquelle la valeur des valeurs moyennes pondérées mémorisées au préalable se trouve au maximum.

8. Méthode d'ajustage d'une installation à caméra selon la revendication 6 ou 7, **caractérisée en ce que** les zones damage prédéterminées sont au moins ces points de l'image qui se trouvent sur un rayon R = 1/4 * la largeur de l'image auteur du centre de l'image attendu.

9. Méthode d'ajustage d'une installation à caméra selon une des revendications 6 à 8, **caractérisée en ce que** les valeurs de contraste sont déterminées par la fonction de transfert de modulation.

10. Méthode d'ajustage d'une installation à caméra selon une des revendications 6 à 9, **caractérisée en ce que** la partie du botter sous forme d'un segment sphérique (10) et le perçage cylindrique (12) sont reliés par soudage laser ou par collage.

11. Méthode d'ajustage d'une installation à caméra selon une des revendications 6 à 10, **caractérisée en ce que** les valeurs de contraste déterminées sont des valeurs de contraste indépendantes les unes des autres pour les valeurs colorimétriques RVB (Rouge, Vert, Bleu).

12. Méthode d'ajustage d'une installation à caméra selon une des revendications 6 à 11, **caractérisée en ce que** les valeurs colorimétriques sont pondérées avec un facteur, les valeurs de contraste du vert sont pondérées davantage que les valeurs de contraste du rouge et les valeurs de contraste du rouge sont pondérées davantage que les valeurs de contraste du bleu.
